Europäisches Patentamt

European Patent Office

Office européen des brevets

(19)

(11) Numéro de publication: **0 072 472**
**A1**

(12) # DEMANDE DE BREVET EUROPEEN

(21) Numéro de dépôt: **82106861.6**

(22) Date de dépôt: **29.07.82**

(51) Int. Cl.³: **G 05 G 9/12**

(30) Priorité: **14.08.81 FR 8115744** .

(43) Date de publication de la demande:
**23.02.83 Bulletin 83/8**

(84) Etats contractants désignés:
**BE DE GB IT NL SE**

(71) Demandeur: **REGIE NATIONALE DES USINES RENAULT**
**Boite postale 103 8-10 avenue Emile Zola**
**F-92109 Boulogne-Billancourt(FR)**

(72) Inventeur: **Boutant, Jean-Jacques**
**44, rue Charles Drot**
**F-92500 Rueil-Maimaison(FR)**

(74) Mandataire: **Casalonga, Axel et al,**
**BUREAU D.A. CASALONGA OFFICE JOSSE & PETIT**
**Baaderstrasse 12-14**
**D-8000 München 5(DE)**

(54) Dispositif de commande de marche arrière pour boîte de vitesses de véhicule.

(57) Le pignon de marche arrière est monté solidaire en translation de son coulisseau de commande (26). L'organe de sélection et de commande d'engagement des rapports de vitesses (20) comporte un doigt (23) coopérant directement avec une fourche à encoche (31) solidaire du coulisseau (26). Le doigt (23) est tel qu'un mouvement angulaire d'engagement du rapport de marche arrière soit sensiblement double de celui d'un autre doigt (22) servant à actionner les coulisseaux de commande des vitesses de marche avant.

FIG.2

EP 0 072 472 A1

Dispositif de commande de marche arrière pour boîte de vitesses de véhicule.

L'invention se rapporte à un dispositif de commande de marche arrière pour boîte de vitesses de véhicule à baladeur(s), comprenant un organe de sélection et d'engagement des rapports de vitesses destiné à coopérer sélectivement avec des coulisseaux de commande des vitesses avant et de marche arrière, cet organe assurant par mouvement angulaire l'engagement du rapport sélectionné.

L'invention concerne plus particulièrement une boîte de vitesses dans laquelle la marche arrière est assurée à l'aide d'un pignon mobile en translation et destiné à être mis en prise, pour l'engagement de la marche arrière, avec un pignon solidaire d'un baladeur d'engagement de marche avant et avec un pignon solidaire d'un arbre de boîte parallèle à l'arbre du ou des baladeurs.

Dans ce cas, la course de commande de marche arrière doit inclure la course d'une marche avant et doit en être approximativement le double, ce qui a amené dans les solutions connues de ce type à utiliser un levier de renvoi multiplicateur interposé entre le coulisseau et le pignon mobile de marche arrière.

La présente invention a pour objet une solution simplifiée évitant l'emploi d'un tel levier de renvoi multiplicateur et réduisant le prix de revient et poids de la commande.

Essentiellement, à cet effet, le dispositif de commande de marche arrière selon l'invention pour une boîte de vitesses de véhicule du type prédéfini, est caractérisé en ce que ledit pignon de marche arrière est monté solidaire en translation de son coulisseau de commande et que ledit organe de sélection et commande d'engagement des rapports de vitesses comporte un doigt coopérant directement avec une fourche à encoche solidaire dudit coulisseau de commande de marche arrière, ce doigt étant conformé pour conférer audit mouvement angulaire d'engagement du rapport de marche arrière un rayon d'action sensiblement double de celui d'un autre doigt dudit organe de sélection et commande servant à actionner les coulisseaux de commande des vitesses de marche avant.

Une forme de réalisation d'un dispositif selon l'invention est d'ailleurs ci-après décrite à titre d'exemple, et en référence au dessin annexé, dans lequel :

la fig. 1 est une vue en coupe transversale partielle d'une boîte de vitesses à quatre vitesses avant et une de marche arrière;

la fig. 2 est une vue en coupe suivant II-II de la fig. 1;

la fig. 3 est une vue en coupe suivant IIIIII de la fig. 2;

la fig. 4 est une vue en coupe suivant IV-IV de la fig. 1.

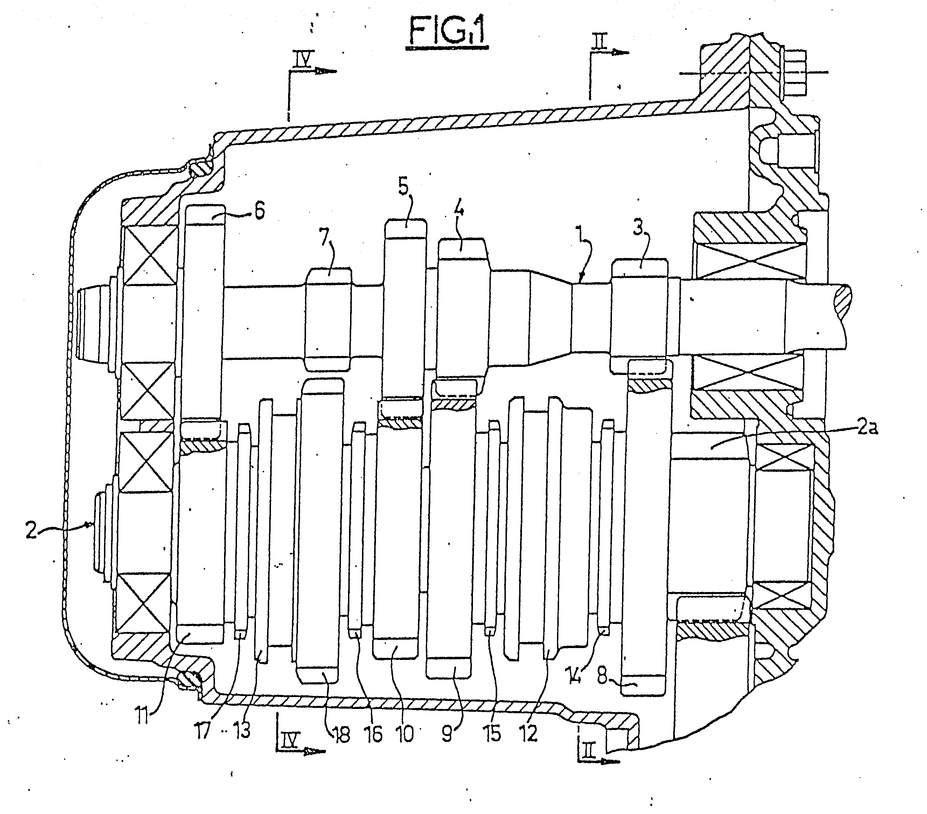

La boîte de vitesses représentée à la fig. 1 comprend un arbre d'entrée 1 et un arbre de sortie parallèle 2. L'arbre d'entrée 1 dont l'extrémité de droite est entraînée par l'embrayage du véhicule porte, solidaires de lui, quatre pignons d'entraînement de marche avant 3, 4, 5, 6 et un pignon d'entraînement 7 de marche arrière. L'arbre de sortie porte quatre pignons 8, 9, 10, 11 montés fous sur lui et engrenant en permanence avec les pignons 3, 4, 5, 6 de marche avant. Les rapports de marche avant peuvent être engagés sélectivement à l'aide de baladeurs 12, 13 faisant partie de synchroniseurs doubles pouvant être de type quelconque et coopérant respectivement avec les crabots 14, 15 des pignons 8, 9 et les crabots 16, 17 des pignons 10, 11, en vue de leur accouplement sélectif avec l'arbre de sortie 2. A titre purement indicatif quant à cet exemple, l'arbre 2 porte ici un pignon de sortie 2a destiné à attaquer la couronne dentée d'un différentiel de transmission groupé avec la boîte.

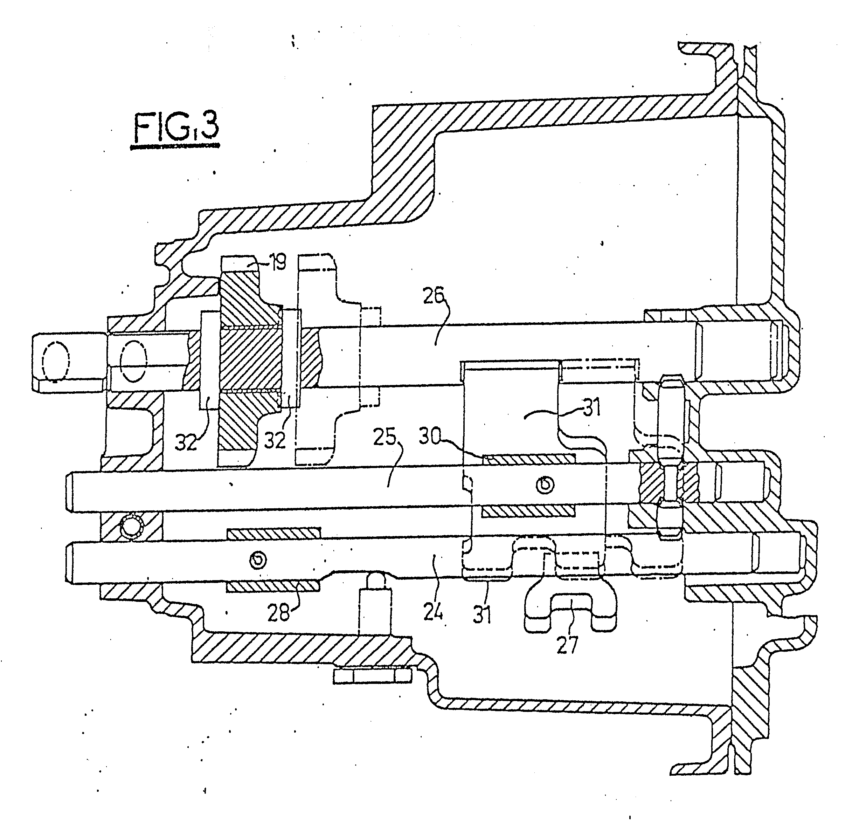

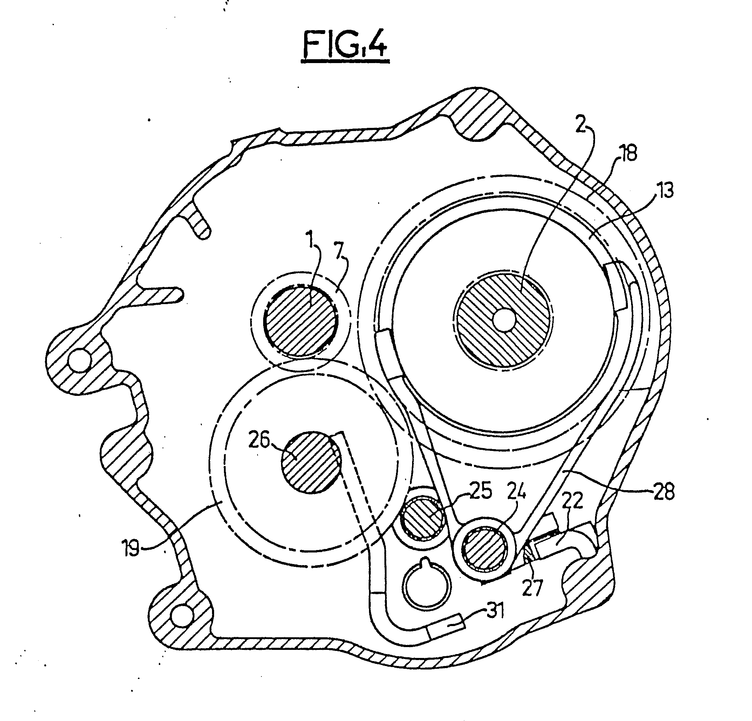

Le baladeur 13 est pourvu d'un pignon 18 de transmission de marche arrière qui est situé dans le même plan que le pignon d'entraînement 7, lorsque le baladeur est en position de point mort, tel qu'on le voit à la fig. 1. La marche arrière est assurée par l'intermédiaire d'un pignon 19 apparaissant sur les fig. 3 et 4, et monté mobile en translation de façon à venir alors engrener avec les pignons 7 et 18, les baladeurs de marche avant étant au point mort. La boîte comporte un organe de sélection et d'engagement des rapports de vitesses, désigné par 20 dans son ensemble, et qui comporte un axe 21 monté coulissant et tournant dans le carter de boîte et sur lequel sont ici montés un levier de manoeuvre 21a et un sélecteur à deux doigts 22, 23 respectivement destinés à actionner des coulisseaux 24, 25 de commande des rapports de vitesses avant et un coulisseau 26 de commande de la marche arrière, tous montés mobiles en translation dans le carter de boîte (voir fig. 3).

L'organe de sélection et engagement des rapports de vitesses est commandé de manière usuelle en ce cas et non représentée comme pouvant être quelconque dans le cadre de l'invention, c'est-à-dire qu'il est soumis à une commande de translation de son axe 21 pour la sélection des coulisseaux à commander et de mouvement angulaire de cet axe 21 pour l'engagement du rapport sélectionné ou son désengagement.

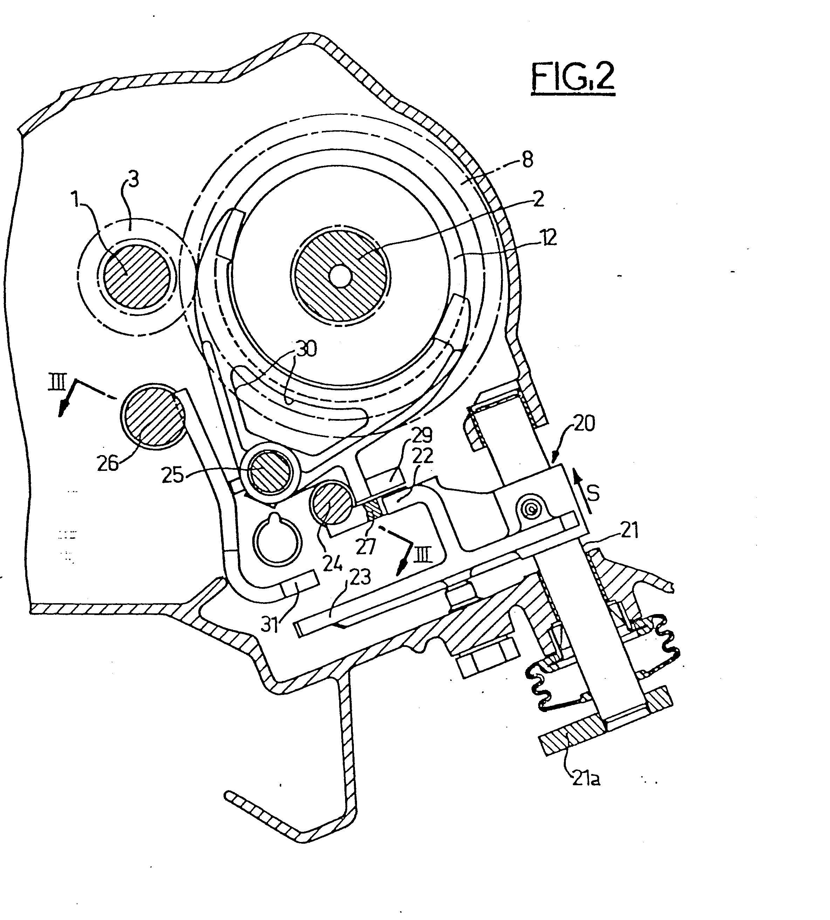

En particulier ici, le doigt 22 coopère avec une fourche à encoche 27 solidaire du coulisseau 24 sur lequel est par ailleurs goupillée une fourchette 28 (voir fig. 3 et 4) engagé dans la gorge du baladeur 13, ou avec une fourche à encoche 29 ménagée sur la fourchette 30 de commande du baladeur 12, qui est engagée dans la gorge de ce dernier et goupillée sur le coulisseau 25 (voir fig. 2). La doigt 23 est destiné à coopérer avec une fourche à encoche 31 solidaire du coulisseau 26 sur lequel le pignon de marche arrière 19 est monté fou mais solidaire de lui en translation, entre deux goupilles 32.

On a représenté à la fig. 2 l'organe 20 de sélection et d'engagement des rapports de vitesses en une position de point mort de la commande, pour laquelle le doigt 22 se trouve normalement engagé dans la fourche à encoche 27 liée à la fourchette 28 de commande du baladeur 13 se trouvant au point mort.

Par translation de l'axe 21 de l'organe 20 dans le sens de la flèche S le doigt 22 peut aussi être engagé dans la fourche à encoche 29 de la fourchette 30 de commande du baladeur 12 se trouvant au point mort.

Il est clair que le baladeur 12 permet l'engagement des premier ou deuxième rapports de vitesses et le baladeur 13 l'engagement des troisième ou quatrième rapports de vitesses, ces engagements par translation des baladeurs résultant d'un mouvement angulaire d'amplitude donnée du doigt 22, qui lui est communiqué par rotation de l'axe 21 de l'organe 20.

La marche arrière est sélectionnée au point mort par une course de translation supplémentaire de l'axe 21 de l'organe 20, qui amène alors le doigt 23 en engagement avec la fourche à encoche 31 solidaire du coulisseau 26, et elle peut être engagée par un mouvement angulaire de ce doigt 23 qui lui est communiqué par rotation de l'axe 21 de l'organe 20 et qui, pour une rotation d'amplitude équivalente à celle des engagements des rapports de marche avant, se traduit par une course de translation sensiblement double du coulisseau 26 par rapport à celle des coulisseaux 24, 25. Cette course permet au pignon 19 de marche arrière de couvrir la course de garde qu'impose la disposition du pignon 18 sur le baladeur 13 (il ne doit pas y avoir ici engagement des pignons 18 et 19 lorsque le baladeur 13 vient engager le crabot 17 du pignon 11 de quatrième vitesse) puis de couvrir sa course d'engagement effectif avec les pignons 7 et 18.

L'homme de l'art appréciera la simplicité d'une telle commande de marche arrière et, bien entendu, de nombreuses variantes pourront être imaginées sans pour autant sortir du domaine de l'invention.

**0072472**

<u>REVENDICATIONS</u>

1. Dispositif de commande de marche arrière pour boîte de vitesses de véhicule à baladeur(s) comprenant, un organe de sélection et d'engagement des rapports de vitesses destiné à coopérer sélectivement avec des coulisseaux de commande des vitesses avant et de marche arrière, cet organe assurant par mouvement angulaire l'engagement du rapport sélectionné, un pignon fou de marche arrière mobile en translation et destiné à être mis en prise, pour l'engagement de la marche arrière, avec un pignon solidaire d'un baladeur d'engagement de marche avant et avec un pignon solidaire d'un arbre de boîte parallèle à l'arbre du ou des baladeurs, caractérisé en ce que ledit pignon de marche arrière (19) est monté solidaire en translation de son coulisseau de commande (26) et que ledit organe de sélection et commande d'engagement des rapports de vitesses (20) comporte un doigt (23) coopérant directement avec une fourche à encoche (31) solidaire dudit coulisseau de commande de marche arrière, ce doigt étant conformé pour conférer audit mouvement angulaire d'engagement du rapport de marche arrière un rayon d'action sensiblement double de celui d'un autre doigt (22) dudit organe de sélection et de commande servant à actionner les coulisseaux de commande des vitesses de marche avant.

FIG.1

1/4    0072472

0072472

FIG.2

FIG.3

FIG.4

**Office européen
des brevets**

## RAPPORT DE RECHERCHE EUROPEENNE

EP 82 10 6861

| | DOCUMENTS CONSIDERES COMME PERTINENTS | | | |
|---|---|---|---|---|
| Catégorie | Citation du document avec indication, en cas de besoin, des parties pertinentes | Revendication concernée | CLASSEMENT DE LA DEMANDE (Int. Cl. ³) | |
| X | US-A-2 931 243 (MAGG)<br>* Colonne 2, ligne 53 - colonne 3, ligne 19; figures 1,3 * | 1 | G 05 G 9/12 | |
| A | FR-A-1 232 503 (GORNINI)<br>* En entier * | 1 | | |
| A | FR-A- 994 187 (GUY MOTORS)<br>* Page 2, colonne de droite en entier; figures 1-7 * | 1 | | |
| A | US-A-2 425 204 (PETERSON)<br>* Colonne 2, ligne 48 - colonne 3, ligne 2; figures 1-3 * | 1 | | |
| A | GB-A-2 062 144 (FORD) | | | |
| | | | DOMAINES TECHNIQUES RECHERCHES (Int. Cl. ³) | |
| A | DE-C- 540 432 (FIAT) | | G 05 G | |
| A | FR-A-2 295 309 (FORD) | | | |
| A | EP-A-0 025 734 (CITROEN) | | | |

Le présent rapport de recherche a été établi pour toutes les revendications

| Lieu de la recherche | Date d'achèvement de la recherche | Examinateur |
|---|---|---|
| LA HAYE | 15-09-1982 | KIESLINGER J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82